# EUROPEAN PATENT SPECIFICATION

(11) **EP 2 249 549 B1**
(45) Date of publication and mention of the grant of the patent: **25.01.2012**
(21) Application number: 09290327.7
(22) Date of filing: 06.05.2009
(51) Int. Cl.: H04L 29/08

(54) **Method for optimizing delivery of content from cache regarding cost**
Verfahren zur Optimierung der Lieferung von Inhalten aus einem Cache mit Bezug auf Kosten
Procédé d'optimisation de la distribution de contenu issu d'un cache par rapport au coût

(43) Date of publication of application: 10.11.2010
(73) Proprietor: Alcatel Lucent, 75008 Paris (FR)
(72) Inventor: Verhoeyen, Marc, 9700 Oudenaarde (BE); De Vleeschauwer, Danny, 9940 Evergem (BE)
(74) Representative: Narmon, Gisèle Marie Thérèse

(56) References cited:
- EP-A- 1 143 337
- US-B1- 6 826 599
- SEHGAL A ET AL: "Cost-distortion optimized caching of streaming media" 2002 IEEE INTERNATIONAL CONFERENCE ON ACOUSTICS, SPEECH, AND SIGNAL PROCESSING. PROCEEDINGS. (ICASSP). ORLANDO, FL, MAY 13 - 17, 2002; [IEEE INTERNATIONAL CONFERENCE ON ACOUSTICS, SPEECH, AND SIGNAL PROCESSING (ICASSP)], NEW YORK, NY : IEEE, US, vol. 2, 13 May 2002 (2002-05-13), pages 1973-1976, XP010804285 ISBN: 978-0-7803-7402-7
- ANTONIOS ARGYRIOU ED - ANTONIOS ARGYRIOU: "Distributed resource allocation for network-supported FGS video streaming" PACKET VIDEO 2007, IEEE, PI, 1 November 2007 (2007-11-01), pages 211-217, XP031170616 ISBN: 978-1-4244-0980-8

## Description

The invention relates to a method for optimizing delivery of content in a telecommunication network wherein said content, f.i. video, is delivered to a user connected to said telecommunication network by a central server and via a set of cache servers.
European Patent Application EP-A-1 143 337 and the article "Cost-distortion optimized caching of streaming media" by Seghal A et A1, 2002 IEEE International Conference on Acoustics, Speech and Signal Processing proceedings of May 13-17, 2002 in Orlando both describe such a telecommunications network where the content is cached by the cache servers based on a cost function. This caching is however done in a fixed way. In other words, if the conditions that influence the cost for delivering the content to the users via the cache servers change, the caching is not changed, and could thus no longer be optimal.
It is an object of the invention, to provide a method for optimizing the above described delivery in order to reduce as much as possible the delivery cost and to improve the reaction time towards the user to his requests (e.g. start playing, trick play commands).
The method according to the invention realizes this object in that said method includes a step of a placement server, also connected to said telecommunication network, calculating a first value and a second value of a cost function that reflects a cost for transmittting said content to said user via respectively a first cache server of said set and via a second cache server of said set and the cost for storing it there, said method also including the steps of comparing said first value and said second value, said content being cached by said first cache server and not by said second cache server, and that said method includes the additional step of triggering said first cache server to transmit said content to said second cache server if said second value is smaller than said first value, said cost function taking into account at least one variable of a list of variables, said variables being related to either one of available network resources, local content popularity, network structure, local server storage capacity, format in which said cache servers can store said content.

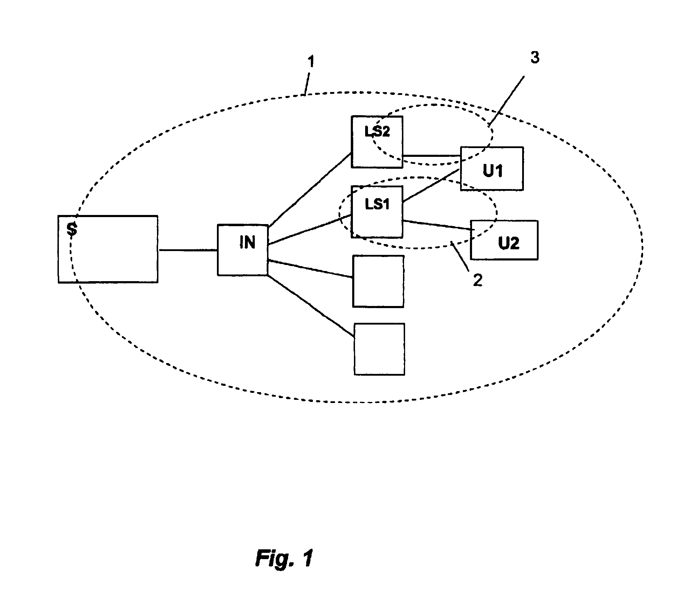

In an alternative the method according to the invention realizes this object in that said method includes a step of a placement server also connected to said telecommunication network minimizing a cost function that reflects a cost for transmitting said content to said user via said set of cache servers and the cost for storing said data at said cache servers, deducing therefrom where said content should be optimally stored, triggering migration of said content between a first cache server of said set that already caches said content to a second cache server of said set that does not cache said content to obtain said optimal storage, said cost function taking into account at least one variable of a list of variables, said variables being related to either one of available network resources, local content popularity, network structure, storage capacity of said set of cache servers, format in which said content can be stored by said cache servers.
In this way, content originally stored by a cache server and delivered to a user via that cache server will be migrated to another cache server for further delivery if this reduces the needed network resources to deliver the content and/or if also another subset of users serviced by this other cache server could request this content and/or if routing to the user is easier via the other server and/or if the other server has more storage capacity, or any combination of these or related criteria.
An additional feature of an embodiment of the method according to the invention is that said placement server applies said method on a periodic basis. In this way changes in the above criteria will be taken into account in a flexible way.
Another additional feature of an embodiment of the method according to the invention is that said placement server is a cache server of said set of cache servers.
Still another additional feature of an embodiment of the method according to the invention is that said placement server in addition triggers the transformation of said content into another format if said second cache server stores said content in said another format
The invention also relates to a placement server and a cache server realizing the above method and features.
Embodiments of a telecommunication system and servers in accordance with embodiments of the present invention are hereafter described, by way of example only, and with reference to the accompanying Fig. 1 that represents a video distribution system wherein a central server S is via an intermediate server IN connected to local cache servers of which LS1 and LS2. LS1 and LS2 both service a set of users. These users can be single users or user communities. LS1 services user (community) U1 and LS2 services user (communities) U1 and user U2. The ellipses in dotted line, 1, 2 and 3 show the geography that is relevant for measuring popularity over the content libraries at IN (dotted line 1), LS1 (dotted line 2) and LS2 (dotted line 3). The full video content for distribution within the system is maintained in S. IN, LS1 and LS2 contain caches, i.e., they are replicating content also available in S.

Initially S distributes content to the local cache servers whenever content is popular enough and the local cache servers stream the content to the requesting user. Later on, when a user of the subset serviced by a local cache server already having the content stored, requests this content the server S triggers this local server to provide this content. In an alternative embodiment the local cache server intercepts the request and if this local cache server has the content it processes it. Information on the request is sent to S so that it can compute the content popularity based on the number of received requests

In the considered embodiment S also acts as a placement server. It contains a database (not shown) where it keeps track of the locations of all the content in the entire system and maintains information on the network topology, including f.i. the transport cost on each link of the network, on the available network resources, on the storage capacity of the local cache servers, including f.i. the cost of storage connectivity to these local cache servers, and on the local content popularity of the content it manages. The latter is computed from the requests received from the users, the other information is obtained from network control nodes in the network. To reduce the complexity of the figure and since such control nodes are well known for a person skilled in the art, these nodes are not shown in Fig. 1.
S also contains processing means (not shown) that, on a periodic basis, calculate for each of the local cache servers, the value of a cost function that reflects the cost for transmitting the full video content to the users. This cost function takes into account the above mentioned information being the available network resources, the content popularity of the content in function of the geographical location of the users, the structure of the network and the storage capacity of the local cache servers. Based on the result of the calculation, S sends messages to the local cache servers to move content to one or more other local cache servers also servicing the concerned users if this minimizes the cost for streaming the content to that user. This result also determines if the sending should be done in unicast or in multicast mode.
In the shown embodiment S will f.i. trigger LS2 to move content it is sending to U1 to LS1 when U2 starts requesting the same content since this will increase the local popularity at LS1 for this content and make it more efficient to store the content at LS1, provided the cost for storing and transmission over LS1 does not increase the overall cost.

The cost function can f.i. be a weighted sum of the cost to redistribute the content items from their current cache location to a future cache location and the cost to serve all future requests from this future location. The former cost depends on the momentary available transport resources, while the latter depends on the projected local popularity of each content item.

In the above described embodiment the decision taking about moving content to another local cache server is taken centrally. However, in an alternative embodiment the concerned functions for doing so could equally well be part of the local servers.
Also, in this embodiment S is functioning as central content provider as well as placement server managing the content migration between the cache servers. In an alternative embodiment these functions can be performed by 2 separate nodes, one being the content provider and the other one being a separate placement server
In addition, in an alternative embodiment S keeps information in its database on the format in which the cache servers are able to store content. Before triggering migration of content from one cache to another one S checks if the format in which the content is stored in that one server corresponds to the format in which the other cache server can store this content. When needed S will include in the trigger message for the migration an indication that the content has to be transformed to the format used by the other cache server. This conversion can be done by the triggered cache server before the transmission or by the receiving server upon reception of the content. In the latter case an indication will be transmitted with the content that this conversion has to be performed
In still an alternative embodiment the cost function considered by S also takes into account the cost for performing the format transformation. This cost is then part of the information stored by S.
The functions of S and the local cache servers represented by LS1 and LS2 shown in Fig. 1, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Other hardware, conventional and/or custom, may also be included.

The above description and drawing merely illustrate the principles of the invention. It will thus be appreciated that, based on this description, those skilled in the art will be able to devise various arrangements that, although not explicitly described or shown herein, embody the principles of the invention, which is defined by the claims.

## Claims

1. Method for optimizing delivery of content in a telecommunication network wherein said content is delivered by a placement server (S) connected via said telecommunication network to a user (U1 ; U2) said telecommunication network comprising a set of cache servers (LS1 ; LS2), said method includes the steps: the placement server (S), calculating a first value and a second value of a cost function that reflects a cost for transmittting said content to said user via a first cache server of said set (LS1, LS2) and via a second cache server of said set (LS1, LS2) and the cost for storing the center, in the first or second cache server comparing said first and said second value, said content being cached by said first cache server and not by said second cache server; the method being **characterized by** the step of triggering said first cache server to transmit said content to said second cache server if said second value is smaller than said first value, said cost function taking into account at least one variable of a list of variables, said variables being related to either one of available network resources, local content popularity, network structure, cache server storage capacity, format in which said cache servers can store said content.

2. Method for optimizing delivery of content in a telecommunication network wherein said content is delivered by a placement server (S) connected via said telecommunication network to a user (U1 ; U2), said telecommunication network comprising a set of cache servers (LS1 ; LS2), said method includes the steps the placement server (S) minimizing a cost function that reflects a cost for transmitting said content to said user via satd set of cache servers (LS1, LS2) and the cost for storing said data at said cache servers (LS1, LS2), deducing from the minimized cost function result where said content should be optimally stored; the method being **characterized by** the step of triggering migration of said content between a first cache server of said set that already caches said content to a second cache server of said set that does not cache said content to obtain said optimal storage, said cost function taking into account at least one variable of a list of variables, said variables being related to either one of available network ressources, local content popularity, network structure, storage capacity of said set of cache servers, format in which said content can be stored by said cache servers.

3. Method according to claim 1 or 2, **characterized in that** said placement server (S) applies said method on a periodic basis.

4. Method according to claims 1 to 3 **characterized in that** said placement server (S) is a cache server of said set of cache servers.

5. Method according to any of the claims 1 to 4, **characterized in that** said placement server (S) in addition triggers the transformation of said content into another format if said second cache server stores said content in said another format.

6. Placement server (S) for realizing a method according to any of independent claim 1, and its dependent claims 3, 4, or 5, said placement server (S) containing an information database adapted to store information on either one of available resources in said network, local popularity of content in function of locations at which said content is provided, structure of said network, storage capacity of cache servers in said network said cache servers providing content at respective ones of said locations, format in which said cache servers can store said content, said placement server (S) also containing processing means adapted to calculate a first value and a second value of a cost function that reflects a cost for transmitting said content to a user respectively via a first cache server that already caches said content and via a second cache server that does not cache said content and for storing said content by said first cache server and by said second cache server, said cost function taking into account at least one variable of a list of variables, said variables being related to either one of available network resources, content popularity, network structure, local server storage capacity, format in which said cache servers can store said content, said placement server also containing transmission means adapted to transmit a trigger message to said first cache server to trigger transmission of said content stored by said first cache server to said second cache server if said second value is lower than said first value.

7. Placement server (S) for realizing a method according to any of independent claim 2 and its dependent claims 3, 4, or 5, said placement server (S) containing an information database adapted to store information on either one of available resources in said network, local popularity of content in function of locations at which said content is provided, structure of said network, storage capacity of cache servers in said network said cache servers providing said content at respective ones of said locations, format in which said cache servers can store said content, said placement server (S) also containing processing means adapted to minimize a cost function that reflects a cost for transmitting said content to a user via a set of said cache servers servicing said user and deducing therefrom an optimal storage of said content by said cache servers, said cost function taking into account at least one variable of a list of variables, said variables being related to either one of available network resources, content popularity, network structure, local server storage capacity, format in which said cache servers can store said content, said placement server also containing transmission means adapted to transmit a trigger message to either one of said cache servers to trigger transmission of said content stored by a first cache server of said cache servers already caching said content to a second cache server of said cache servers not yet caching said content to realize said optimal storage.

8. Placement server (S) according to claim 6 or 7 **characterized in that** said processing means is adapted to calculate said first value and said second value on a periodic basis.

9. Placement server (S) according to any of the claims 6 to 8, **characterized in that** said placement server is adapted to function as one of said cache servers.

10. Placement server (S) according to any of the claims 6 to 9, **characterized in that** said transmission means are adapted to include in said trigger message an indication that said content has to be transformed in another format.

## Patentansprüche

1. Verfahren zur Optimierung der Lieferung von Inhalt in einem Telekommunikationsnetzwerk, wobei der besagte Inhalt von einem über das besagte Telekommunikationswerk an einen Nutzer (U1; U2) angeschlossenen Placement-Server (S) geliefert wird, wobei das besagte Telekommunikationsnetzwerk einen Satz von Cache-Servern (LS1; LS2) umfasst, wobei das besagte Verfahren die folgenden Schritte umfasst: Berechnen, durch den Placement-Server (S), eines ersten Wertes und eines zweiten Wertes einer Kostenfunktion, welche die Kosten für die Übertragung des besagten Inhalts über einen ersten Cache-Server des besagten Satzes (LS1; LS2) und über einen zweiten Cache-Server des besagten Satzes (LS1; LS2) an den besagten Nutzer und die Kosten für das Speichern des Inhalts in dem ersten oder in dem zweiten Cache-Server reflektiert; Vergleichen des besagten ersten Wertes und des besagten zweiten Wertes, wobei der besagte Inhalt in dem besagten ersten Cache-Server und nicht in dem besagten zweiten Cache-Server zwischengespeichert wird; wobei das Verfahren durch den Schritt des Triggerns des besagten ersten Cache-Servers zum Übertragen des besagten Inhalts an den besagten zweiten Cache-Server, wenn der besagte zweite Wert kleiner als der besagte erste Wert ist, **gekennzeichnet** ist, wobei die besagte Kostenfunktion mindestens eine Variable aus einer Liste von Variablen berücksichtigt, wobei sich die besagten Variablen auf ein beliebiges der folgenden Kriterien bezieht: verfügbare Netzwerkressourcen, Iokale Inhaltspopularität, Netzwerkstruktur, Speicherkapazität des Cache-Servers, Format, in welchem die besagten Cache-Server den besagten Inhalt speichern können.

2. Verfahren zur Optimierung der Lieferung von Inhalt in einem Telekommunikationsnetzwerk, wobei der besagte Inhalt von einem über das besagte Telekommunikationswerk an einen Nutzer (U1; U2) angeschlossenen Placement-Server (S) geliefert wird, wobei das besagte Telekommunikationsnetzwerk einen Satz von Cache-Servern (LS1; LS2) umfasst, wobei das besagte Verfahren die folgenden Schritte umfasst: Minimieren, durch den Placement-Server (S), einer Kostenfunktion, welche die Kosten für die Übertragung des besagten Inhalts über den besagten Satz von Cache-Servern (LS1; LS2) an den besagten Nutzer und die Kosten für das Speichern der besagten Daten in den besagten Cache-Servern (LS1; LS2) reflektiert; Ableiten, aus dem minimierten Kostenfunktionsergebnis, wo der besagte Inhalt optimal gespeichert werden soll; wobei das Verfahren durch den Schritt des Triggerns der Migration des besagten Inhalts zwischen einem ersten Cache-Server des besagten Satzes, welcher bereits den besagten Inhalt zwischenspeichert, zu einem zweiten Cache-Server des besagten Satzes, welcher den besagten Inhalt nicht zwischenspeichert, um die besagte optimale Speicherung zu erzielen, **gekennzeichnet** ist, wobei die besagte Kostenfunktion mindestens eine Variable aus einer Liste von Variablen berücksichtigt, wobei sich die besagten Variablen auf ein beliebiges der folgenden Kriterien bezieht: verfügbare Netzwerkressourcen, lokale Inhaltspopularität, Netzwerkstruktur, Speicherkapazität des besagten Satzes von Cache-Servern, Format, in welchem der besagte Inhalt von den besagten Cache-Servern gespeichert werden kann.

3. Verfahren nach Anspruch 1 oder 2, **dadurch gekennzeichnet, dass** der besagte Placement-Speicher (S) das Verfahren auf einer periodischen Basis anwendet.

4. Verfahren nach Anspruch 1 bis 3, **dadurch gekennzeichnet, dass** der besagte Placement-Server (S) ein Cache-Server des besagten Satzes von Cache-Servern ist.

5. Verfahren nach einem beliebigen der Ansprüche 1 bis 4, **dadurch gekennzeichnet, dass** der besagte Placement-Server (S) zusätzlich die Umwandlung des besagten Inhalts in ein anderes Format triggert, wenn der besagte zweite Cache-Server den besagten Inhalt in dem besagten anderen Format speichert.

6. Placement-Server (S) zum Durchführen eines Verfahrens gemäß entweder dem unabhängigen Anspruch 1 oder einem beliebigen der von diesem abhängigen Ansprüche 3, 4 oder 5, wobei der besagte Placement-Server (S) eine Informationsdatenbasis enthält, welche für das Speichern von Informationen zu einem beliebigen der folgenden Kriterien ausgelegt ist: verfügbare Ressourcen in dem besagten Netzwerk, lokale Popularität des Inhalts in Abhängigkeit der Standorte, an welchen der besagte Inhalt bereitgestellt wird, Struktur des besagten Netzwerks, Speicherkapazität der Cache-Server in dem besagten Netzwerk, wobei die besagten Cache-Server Inhalt an entsprechende der besagten Standorte bereitstellen, Format, in welchem die besagten Cache-Server den besagten Inhalt speichern können, wobei der besagte Placement-Server (S) ebenfalls Verarbeitungsmittel enthält, die für das Berechnen eines ersten Wertes und eines zweiten Wertes einer Kostenfunktion, welche die Kosten für die Übertragung des besagten Inhalts an einen Nutzer jeweils über einen ersten Cache-Server, welcher den besagten Inhalt bereits zwischenspeichert, und über einen zweiten Cache-Server, welcher den besagten Inhalt nicht zwischenspeichert, und für das Speichern des besagten Inhalts durch den besagten ersten Cache-Server und durch den besagten zweiten Cache-Server ausgelegt sind, wobei die besagte Kostenfunktion mindestens eine Variable aus einer Liste von Variablen berücksichtigt, wobei sich die besagten Variablen auf ein beliebiges der folgenden Kriterien bezieht: verfügbare Netzwerkressourcen, Inhaltspopularität, Netzwerkstruktur, Speicherkapazität des Iokalen Servers, Format, in welchem die besagten Cache-Server den besagten Inhalt speichern können, wobei der besagte Placement-Server ebenfalls Übertragungsmittel enthält, welche für die Übertragung einer Trigger-Nachricht an den besagten ersten Cache-Server ausgelegt sind, um die Übertragung des besagten in dem besagten ersten Cache-Server gespeicherten Inhalts an den besagten zweiten Cache-Server zu triggern, wenn der besagte zweite Wert niedriger als der besagte erste Wert ist.

7. Placement-Server (S) zum Durchführen eines Verfahrens gemäß entweder dem unabhängigen Anspruch 1 oder einem beliebigen der von diesem abhängigen Ansprüchen 3, 4 oder 5, wobei der besagte Placement-Server (S) eine Informationsdatenbasis enthält, welche für das Speichern von Informationen zu einem beliebigen der folgenden Kriterien ausgelegt ist: verfügbare Ressourcen in dem besagten Netzwerk, Iokale Popularität des Inhalts in Abhängigkeit der Standorte, an welchen der besagte Inhalt bereitgestellt wird, Struktur des besagten Netzwerks, Speicherkapazität der Cache-Server in dem besagten Netzwerk, wobei die besagten Cache-Server den besagten Inhalt an entsprechende der besagten Standorte bereitstellen, Format, in welchem die besagten Cache-Server den besagten Inhalt speichern können, wobei der besagte Placement-Server (S) ebenfalls Verarbeitungsmittel enthält, die dazu ausgelegt sind, eine Kostenfunktion, welche die Kosten für die Übertragung des besagten Inhalts über einen Satz von besagten Cache-Servern, die den besagten Nutzer bedienen, an einen Nutzer reflektieren, zu minimieren und daraus eine optimale Speicherung des besagten Inhalts in den besagten Cache-Speichern abzuleiten, wobei die besagte Kostenfunktion mindestens eine Variable aus einer Liste von Variablen berücksichtigt, wobei sich die besagten Variablen auf ein beliebiges der folgenden Kriterien bezieht: verfügbare Netzwerkressourcen, Inhaltspopularität, Netzwerkstruktur, Speicherkapazität des Iokalen Servers, Format, in welchem die besagten Cache-Server den besagten Inhalt speichern können, wobei der besagte Placement-Server ebenfalls Übertragungsmittel enthält, welche für die Übertragung einer Trigger-Nachricht an einen beliebigen der besagten Cache-Speicher ausgelegt sind, um die Übertragung des besagten in einem ersten Cache-Server der besagten Cache-Server, welcher den besagten Inhalt bereits zwischenspeichert, an einen zweiten der besagten Cache-Server, welcher den besagten Inhalt noch nicht zwischenspeichert, zu triggern, um eine optimale Speicherung zu erzielen.

8. Placement-Server (S) nach Anspruch 6 oder 7, **dadurch gekennzeichnet, dass** das besagte Verarbeitungsmittel für das Berechnen des besagten ersten Wertes und des besagten zweiten Wertes auf einer periodischen Basis ausgelegt ist.

9. Placement-Server (S) nach einem beliebigen der Ansprüche 6 bis 8, **dadurch gekennzeichnet, dass** der besagte Placement-Server für den Betrieb als einer der besagten Cache-Server ausgelegt ist.

10. Placement-Server (S) nach einem beliebigen der Ansprüche 6 bis 9, **dadurch gekennzeichnet, dass** die besagten Übertragungsmittel für das Einfügen, in die besagte Triggernachricht, einer Angabe, dass der besagte Inhalt in ein anderes Format umgewandelt werden muss, ausgelegt sind.

## Revendications

1. Procédé d'optimisation de la distribution du contenu dans un réseau de télécommunication, selon lequel ledit contenu est distribué par un serveur de placement (S) connecté à un utilisateur (U1 ; U2) par le biais dudit réseau de télécommunication, ledit réseau de télécommunication comprenant un ensemble de serveurs de cache (LS1 ; LS2), ledit procédé comprenant les étapes suivantes : le serveur de placement (S) calcule une première valeur et une deuxième valeur d'une fonction de coût qui reflète un coût pour transmettre ledit contenu audit utilisateur par le biais d'un premier serveur de cache dudit ensemble (LS1 ; LS2) et par le biais d'un deuxième serveur de cache dudit ensemble (LS1 ; LS2) et le coût pour le stockage du contenu dans le premier ou le deuxième serveur de cache, compare ladite première valeur et ladite deuxième valeur, ledit contenu étant mis en cache par ledit premier serveur de cache et non par ledit deuxième serveur de cache ; le procédé étant **caractérisé par** l'étape de déclenchement dudit premier serveur de cache pour transmettre ledit contenu audit deuxième serveur de cache si ladite deuxième valeur est inférieure à ladite première valeur, ladite fonction de coût tenant compte d'au moins une variable d'une liste de variables, lesdites variables se rapportant soit aux ressources disponibles du réseau, soit à la popularité locale du contenu, soit à la structure du réseau, soit à la capacité de stockage du serveur de cache, soit au format dans lequel lesdits serveurs de cache peuvent stocker ledit contenu.

2. Procédé d'optimisation de la distribution du contenu dans un réseau de télécommunication, selon lequel ledit contenu est distribué par un serveur de placement (S) connecté à un utilisateur (U1 ; U2) par le biais dudit réseau de télécommunication, ledit réseau de télécommunication comprenant un ensemble de serveurs de cache (LS1 ; LS2), ledit procédé comprenant les étapes suivantes : le serveur de placement (S) minimise une fonction de coût qui reflète un coût pour transmettre ledit contenu audit utilisateur par le biais dudit ensemble de serveurs de cache (LS1 ; LS2) et le coût pour le stockage desdites données au niveau desdits serveurs de cache (LS1 ; LS2), déduit du résultat de la fonction de coût minimisée l'endroit où ledit contenu devrait être stocké de manière optimale ; le procédé étant **caractérisé par** l'étape de déclenchement de la migration dudit contenu entre un premier serveur de cache dudit ensemble qui met déjà en cache ledit contenu vers un deuxième serveur de cache dudit ensemble qui ne met pas ledit contenu en cache afin d'obtenir ledit stockage optimal, ladite fonction de coût tenant compte d'au moins une variable d'une liste de variables, lesdites variables se rapportant soit aux ressources disponibles du réseau, soit à la popularité locale du contenu, soit à la structure du réseau, soit à la capacité de stockage dudit ensemble de serveurs de cache, soit au format dans lequel ledit contenu peut être stocké par lesdits serveurs de cache.

3. Procédé selon la revendication 1 ou 2, **caractérisé en ce que** ledit serveur de placement (S) applique périodiquement le procédé.

4. Procédé selon les revendications 1 à 3, **caractérisé en ce que** ledit serveur de placement (S) est un serveur de cache dudit ensemble de serveurs de cache.

5. Procédé selon l'une quelconque des revendications 1 à 4, **caractérisé en ce que** ledit serveur de placement (S) déclenche en plus la transformation dudit contenu en un autre format si ledit deuxième serveur de cache stocke ledit contenu dans ledit autre format.

6. Serveur de placement (S) pour mettre en oeuvre un procédé selon l'une quelconque de la revendication indépendante 1 et de ses revendications dépendantes 3, 4 ou 5, ledit serveur de placement (S) contenant une base de données d'informations adaptée pour stocker des informations soit sur les ressources disponibles dans ledit réseau, soit sur la popularité locale du contenu en fonction des emplacements où ledit contenu est délivré, soit sur la structure dudit réseau, soit sur la capacité de stockage des serveurs de cache dans ledit réseau, lesdits serveurs de cache délivrant le contenu auxdits emplacements respectifs, soit sur le format dans lequel lesdits serveurs de cache peuvent stocker ledit contenu, ledit serveur de placement (S) contenant également des moyens de traitement adaptés pour calculer une première valeur et une deuxième valeur d'une fonction de coût qui reflète un coût pour transmettre ledit contenu à un utilisateur respectivement par le biais d'un premier serveur de cache qui met déjà ledit contenu en cache et par le biais d'un deuxième serveur de cache qui ne met pas ledit contenu en cache et pour le stockage dudit contenu par ledit premier serveur de cache et par ledit deuxième serveur de cache, ladite fonction de coût tenant compte d'au moins une variable d'une liste de variables, lesdites variables se rapportant soit aux ressources disponibles du réseau, soit à la popularité du contenu, soit à la structure du réseau, soit à la capacité de stockage du serveur local, soit au format dans lequel lesdits serveurs de cache peuvent stocker ledit contenu, ledit serveur de placement contenant également des moyens de transmission adaptés pour transmettre un message de déclenchement audit premier serveur de cache pour déclencher la transmission dudit contenu stocké par ledit premier serveur de cache audit deuxième serveur de cache si ladite deuxième valeur est inférieure à ladite première valeur.

7. Serveur de placement (S) pour mettre en oeuvre un procédé selon l'une quelconque de la revendication indépendante 2 et de ses revendications dépendantes 3, 4 ou 5, ledit serveur de placement (S) contenant une base de données d'informations adaptée pour stocker des informations soit sur les ressources disponibles dans ledit réseau, soit sur la popularité locale du contenu en fonction des emplacements où ledit contenu est délivré, soit sur la structure dudit réseau, soit sur la capacité de stockage des serveurs de cache dans ledit réseau, lesdits serveurs de cache délivrant ledit contenu auxdits emplacements respectifs, soit sur le format dans lequel lesdits serveurs de cache peuvent stocker ledit contenu, ledit serveur de placement (S) contenant également des moyens de traitement adaptés pour minimiser une fonction de coût qui reflète un coût pour transmettre ledit contenu à un utilisateur par le biais d'un ensemble desdits serveurs de cache qui desservent ledit utilisateur et pour déduire de celle-ci un stockage optimal dudit contenu par lesdits serveurs de cache, ladite fonction de coût tenant compte d'au moins une variable d'une liste de variables, lesdites variables se rapportant soit aux ressources disponibles du réseau, soit à la popularité du contenu, soit à la structure du réseau, soit à la capacité de stockage du serveur local, soit au format dans lequel lesdits serveurs de cache peuvent stocker ledit contenu, ledit serveur de placement contenant également des moyens de transmission adaptés pour transmettre un message de déclenchement à l'un ou l'autre desdits serveurs de cache pour déclencher la transmission dudit contenu stocké par un premier serveur de cache desdits serveurs de cache qui met déjà en cache ledit contenu à un deuxième serveur de cache desdits serveurs de cache qui ne met pas encore en cache ledit contenu afin de réaliser ledit stockage optimal.

8. Serveur de placement (S) selon la revendication 6 ou 7, **caractérisé en ce que** lesdits moyens de traitement sont adaptés pour calculer périodiquement ladite première valeur et ladite deuxième valeur.

9. Serveur de placement (S) selon l'une quelconque des revendications 6 à 8, **caractérisé en ce que** ledit serveur de placement est adapté pour fonctionner comme l'un desdits serveurs de cache.

10. Serveur de placement (S) selon l'une quelconque des revendications 6 à 9, **caractérisé en ce que** lesdits moyens de transmission sont adaptés pour inclure dans ledit message de déclenchement une indication que ledit contenu doit être transformé dans un autre format.
